(19) Europäisches Patentamt
European Patent Office
Office européen des brevets

(11) **EP 1 096 270 B1**

(12) **FASCICULE DE BREVET EUROPEEN**

(45) Date de publication et mention de la délivrance du brevet:
**16.09.2009 Bulletin 2009/38**

(51) Int Cl.:
***G01V 1/28*** *(2006.01)*    ***G01V 3/38*** *(2006.01)*
***G01V 1/30*** *(2006.01)*

(21) Numéro de dépôt: **00402889.0**

(22) Date de dépôt: **19.10.2000**

(54) **Méthode pour modeliser en 2d ou 3d un milieu hétérogène tel que le sous-sol décrit par un ou plusieurs paramètres physiques**

Methode zur 2D oder 3D Modellerstellung einer heterogenen Umgebung, wie z.B. des Bodenuntergrundes, beschrieben durch einen oder mehrere physikalische Parameter

Method of 2D or 3D modelling of a heterogeneous environment like the subsoil described by one or more physical parameters

(84) Etats contractants désignés:
**DK GB IT NL**

(30) Priorité: **29.10.1999 FR 9914027**

(43) Date de publication de la demande:
**02.05.2001 Bulletin 2001/18**

(73) Titulaire: **Institut Français du Pétrole**
**92852 Rueil-Malmaison Cedex (FR)**

(72) Inventeurs:
• **Tonellot, Thierry**
**92500 Rueil-Malmaison (FR)**
• **Mace-Prieur, Danièle**
**92500 Rueil-Malmaison (FR)**
• **Richard, Vincent**
**75012 Paris (FR)**
• **Cuer, Michel**
**34000 Montpellier (FR)**

(56) Documents cités:
**EP-A- 0 889 331          US-A- 5 321 613**
**US-A- 5 798 982**

• **LORTZER G J M ET AL: "AN INTEGRATED APPROACH TO LITHOLOGIC INVERSION-PART I" GEOPHYSICS, US, SOCIETY OF EXPLORATION GEOPHYSICISTS. TULSA, vol. 57, no. 2, 1 février 1992 (1992-02-01), pages 233-244, XP000330780 ISSN: 0016-8033**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne une méthode pour obtenir un modèle représentatif en 2D ou 3D d'un milieu hétérogène tel que le sous-sol, décrit par plusieurs paramètres ou grandeurs physiques, à partir de données obtenues par des mesures indirectes obtenues depuis l'extérieur de celui-ci, et d'autres données, notamment un ensemble de données ponctuelles mesurées in situ, toutes ces données constituant l'information connue a priori sur le milieu.

La méthode selon l'invention trouve des applications dans des domaines très divers, selon le type d'ondes (ondes élastiques, ondes électromagnétiques, etc.) émises pour obtenir ces mesures indirectes.

Dans le cas d'un milieu tel que le sous-sol, les paramètres physiques descriptifs sont par exemple l'impédance qu'il présente relativement à des ondes P ou à des ondes S ou encore sa densité. Les données directes et indirectes dont on dispose sont par exemple des mesures diagraphiques, des données d'exploration sismique, et d'autres données que l'on possède suite à des études géologiques préalables du milieu.

Les ondes émises dans le milieu par une source sismique se propagent dans le sous-sol et se réfléchissent sur les discontinuités du milieu. Elles sont enregistrées par des capteurs couplés avec la formation souterraine et collectées par un dispositif d'acquisition. Les données sismiques que l'on exploitent dans le cadre de la méthode peuvent contenir les informations de variation de l'amplitude avec le déport ou offset : données avant sommation (« prestack »), données liées à la technique connue de l'homme de l'art dite « intercept- gradient » extraites de l'analyse de cette variation, etc.) ou ne pas les contenir : données après sommation (« poststack »).

La méthode s'applique notamment dans le cadre de l'exploration pétrolière pour obtenir des représentations quantitatives et des images plus fines de la structure ou configuration d'une zone souterraine et elle facilite la caractérisation des gisements d'hydrocarbures.

**Etat de la technique**

Des méthodes d'inversion ont été développées, permettant de relier à des données sismiques, à des données mesurées in situ et à des observations ou interprétations, une grandeur physique d'un milieu hétérogène telle que l'impédance qu'il présente relativement à des ondes élastiques.

On part d'un modèle a priori (1D, 2D ou 3D) d'un ou plusieurs paramètres physiques du milieu construit par interprétation des données connues, et l'on définit des opérateurs de covariance décrivant les incertitudes sur ce modèle a priori et aussi les incertitudes sur les données connues. On construit des sismogrammes synthétiques qui constituent la réponse du modèle. On les compare aux sismogrammes réels obtenus par exploration sismique et on minimise de proche en proche les écarts constatés entre eux selon des normes associées à des opérateurs de covariance choisis en fonction d'une évaluation des incertitudes sur le modèle a priori et les enregistrements sismiques.

Les différentes approches connues diffèrent notamment par le nombre de paramètres physiques décrivant le milieu, la dimension du modèle a priori, et la richesse des possibilités offertes dans la prise en compte des paramètres d'incertitude. Elles consistent à obtenir le modèle optimal qui minimise une fonction objectif, somme d'une fonction objectif dite sismique, et d'une fonction objectif dite géologique.

La fonction objectif sismique représente l'écart (au sens de la norme induite par l'opérateur de covariance relatif aux données) entre les données observées et les données synthétiques. Ces dernières résultent de la prise en compte d'un modèle de propagation plus ou moins complexe.

La fonction objectif géologique mesure l'écart au modèle a priori (au sens de la norme induite par l'opérateur de covariance relatif au milieu).

Parmi ces méthodes, on peut citer celles décrites par Brac J. et al; "Inversion with A Priori Information: an Approach to Integrated Stratigraphic Interpretation"; in Sheriff R.E.Ed., Reservoir Geophysics, Soc. Expl. Geophys., Investigations in Geophysics 7).

Une autre méthode de modélisation en 2D d'une grandeur physique par inversion stratigraphique est également décrite dans le brevet EP 354.112 du demandeur.

Par le brevet FR 2.765.692 du demandeur, on connaît aussi une méthode du même type pour modéliser en 3D un paramètre ou grandeur physique telle que l'impédance d'un milieu hétérogène, avec construction d'un modèle a priori à partir d'un modèle géométrique en 3D comprenant plusieurs volumes feuilletés (unités sédimentaires) et aussi de valeurs connues de cette grandeur en différents points du milieu, la sélection d'un modèle de covariance le long des feuilles des différents volumes et la formation d'un modèle optimal par un processus d'inversion à partir du modèle a priori.

Les méthodes précédentes ne permettent de modéliser que la variation d'un seul paramètre physique dans le milieu considéré. De plus, les paramètres que l'on utilise pour décrire les incertitudes sur le modèle a priori (paramètres définissant l'opérateur de covariance) sont constants dans tout le domaine ou par unité géologique.

Des méthodes existent qui permettent de modéliser plusieurs grandeurs ou paramètres physiques dans un milieu. On en trouve décrites notamment par :

Simmons et Backus, 1996 « Waveform-based inversion and AVO prediction-error », in Geophysics, 61, p. 1575-1588 ; ou par

Pan et al., 1994 « An Integrated Target Oriented Prestack Elastic Waveform Inversion : Sensitivity, Calibration, and Application », in Geophysics, 59, 9, p. 1392-1404.

Mais les modèles a priori considérés dans le cadre de ces méthodes connues, sont de type 1D (ils ne dépendent que de la profondeur), et chaque groupe de traces relatif à une position latérale donnée du milieu (CDP), est traité indépendamment d'une position latérale à une autre.

## La méthode selon l'invention

La méthode selon l'invention permet d'étendre l'approche développée dans les deux brevets précédemment cités, au cas de plusieurs grandeurs ou paramètres physiques en offrant de plus la possibilité de faire varier en tout point du milieu les paramètres d'incertitude décrivant les incertitudes sur le modèle a priori, moyennant certaines conditions.

La méthode a pour objet de déterminer un modèle optimal en 2 ou 3 dimensions (2D ou 3D), représentatif de la variation dans un milieu hétérogène de plusieurs paramètres physiques à partir de données connues obtenues par différents moyens : données enregistrées correspondant à des ondes renvoyées par les discontinuités du milieu en réponse à des ondes qui s'y propagent et à partir d'un modèle a priori (2D ou 3D) de ce milieu hétérogène, tout en prenant en compte les incertitudes sur les données enregistrées ainsi que celles sur le modèle a priori.

La méthode selon l'invention permet d'obtenir un modèle optimisé représentatif en 2D ou 3D d'un milieu hétérogène tel que le sous-sol, décrit par au moins un ou plusieurs paramètre(s) ou grandeur(s) physique(s), à partir de données enregistrées correspondant à des ondes renvoyées par le milieu et captées par des récepteurs couplés avec le milieu, en réponse à des ondes qui y sont transmises par une source, et d'information a priori incluant des données mesurées in situ.

Elle comporte la construction d'un modèle géométrique en 2D ou 3D décrivant des lignes ou surfaces de corrélation, la construction d'un modèle a priori en 2D ou 3D décrit par un ou des paramètre(s) physique(s), à partir de ce modèle géométrique et des données mesurées in situ de ces paramètres physiques faites à différents points du milieu hétérogène, et la formation d'un modèle optimal par inversion des données enregistrées en prenant en compte toutes les informations a priori.

Elle est caractérisée en ce que l'on choisit un opérateur de modélisation des incertitudes sur le modèle a priori, de telle sorte qu'il autorise la prise en compte d'un degré de confiance sur le modèle a priori variable en tout point.

On choisit par exemple un modèle de covariance exponentiel qui peut être variable selon la localisation dans le milieu. Le modèle de covariance sélectionné peut être selon les cas à 1D, à 1D le long des lignes de corrélation, à 2D, à 2D le long des surfaces de corrélation ou bien encore à 3D.

Suivant un ou plusieurs modes de mise en oeuvre, le modèle de covariance exponentiel est relatif à plusieurs paramètres.

Le modèle étant décrit par plusieurs paramètres physiques, on modifie par exemple l'opérateur de covariance de façon à définir des écarts par rapport au modèle a priori pour d'autres paramètres physiques, de telle sorte que ces écarts soient indépendants en chaque point donné du milieu.

Le modèle de covariance est par exemple anisotrope, avec des longueurs de corrélation différentes selon différentes directions dans le milieu.

Suivant un mode de mise en oeuvre, la formation du modèle optimal à plusieurs paramètres physiques est obtenue en minimisant une fonction objectif globale comprenant un terme relatif aux données enregistrées, proportionnel au carré de la norme $L^2$ de l'écart entre des données synthétiques et les données enregistrées, et d'un terme relatif au milieu, constitué dans le cas d'un modèle à 2D respectivement 3D) d'une part du carré de la norme $L^2$ de l'écart par rapport au modèle a priori exprimé par les dits autres paramètres physiques, et d'autre part, du carré de la norme $L^2$ du gradient de cet écart, projeté de ce gradient sur la tangente à la ligne de corrélation locale (respectivement sur le plan tangent à la surface locale de corrélation).

Dans le cas d'un modèle a priori en 3D, on peut former le terme relatif au milieu à partir du carré de la norme $L^2$ de l'écart au modèle a priori mesuré relativement aux dits autres paramètres physiques, de la norme $L^2$ du gradient de cet écart, et du carré du Laplacien de l'écart.

La méthode selon l'invention peut être appliquée à la modélisation d'une zone du sous-sol, les mesures in situ étant obtenues à différentes profondeurs dans un ou plusieurs puits au travers de la zone, les ondes émises étant des ondes élastiques.

La méthode selon l'invention peut être aussi appliquée à la modélisation d'une zone d'un milieu où les ondes émises sont des ondes électromagnétiques.

L'intérêt de l'approche selon l'invention est :

- d'une part d'estimer plusieurs paramètres physiques décrivant le milieu hétérogène, ce qui a pour conséquence de mieux caractériser ce milieu, et

- d'autre part de prendre en compte des informations a priori très riches, tant au niveau de la dimension du modèle a priori que des incertitudes le concernant.

**Présentation des figures**

D'autres caractéristiques et avantages de la méthode selon l'invention apparaîtront à la lecture de la description ci-après et de résultats obtenus sur un exemple de mise en oeuvre, en se référant aux dessins annexés où :

- les Fig. 1 et 2 montrent les résultats obtenus en impédance P et impédance S par une première inversion à partir des seules données PP, c'est à dire sans informations a priori ;

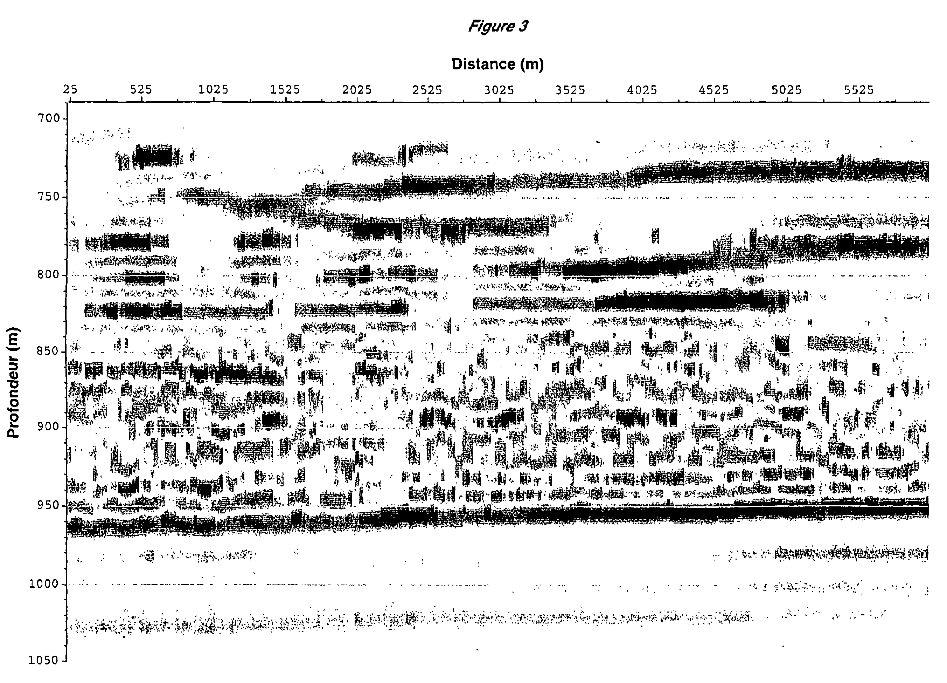

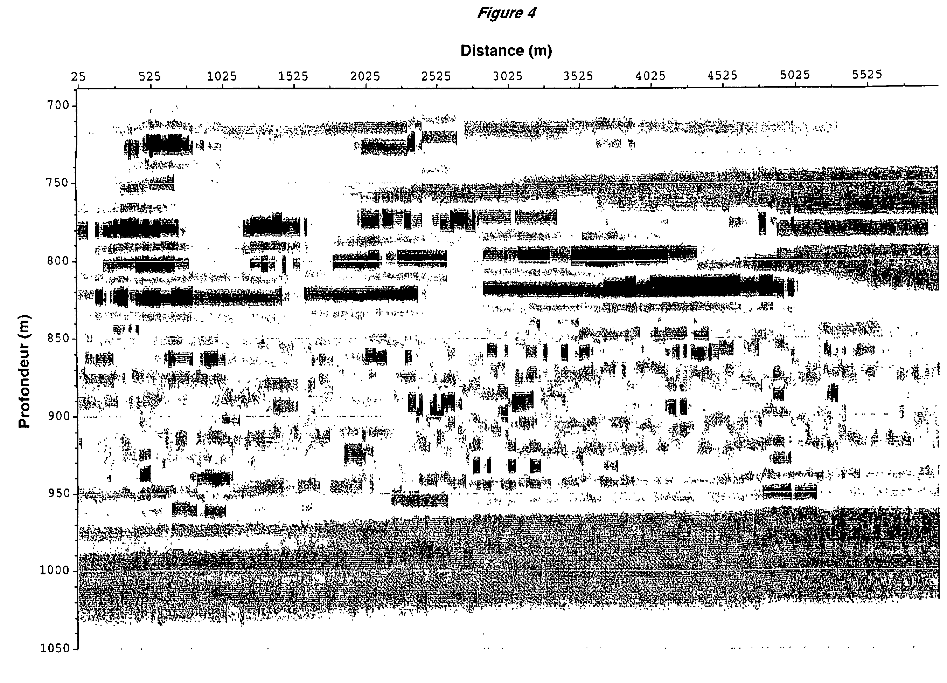

- les Fig. 3 et 4 représentent les impédances P et S de ce réservoir réaliste après filtrage dans la bande de fréquence de la sismique ;

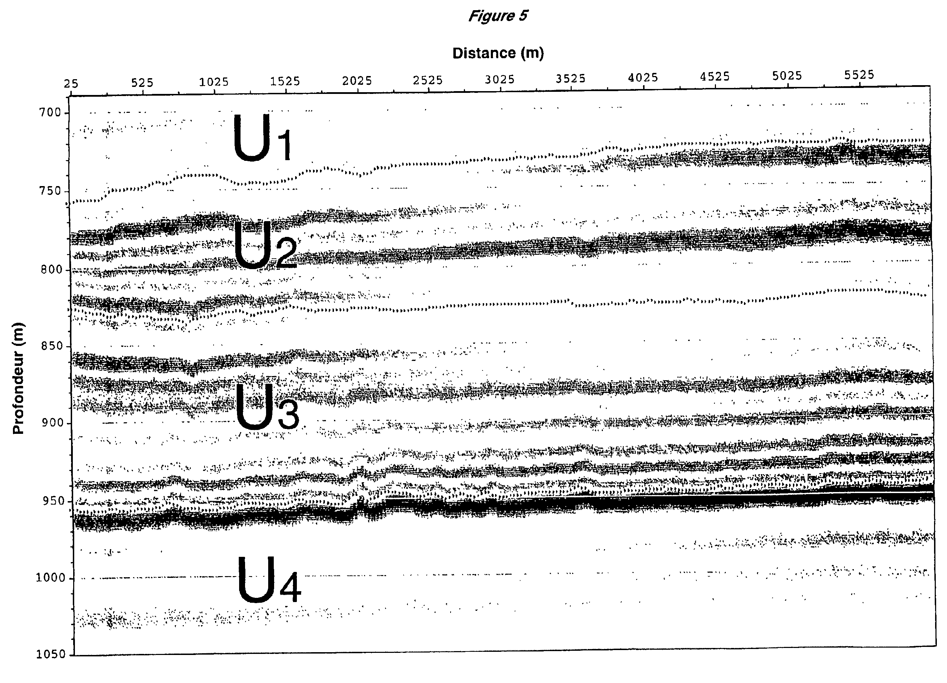

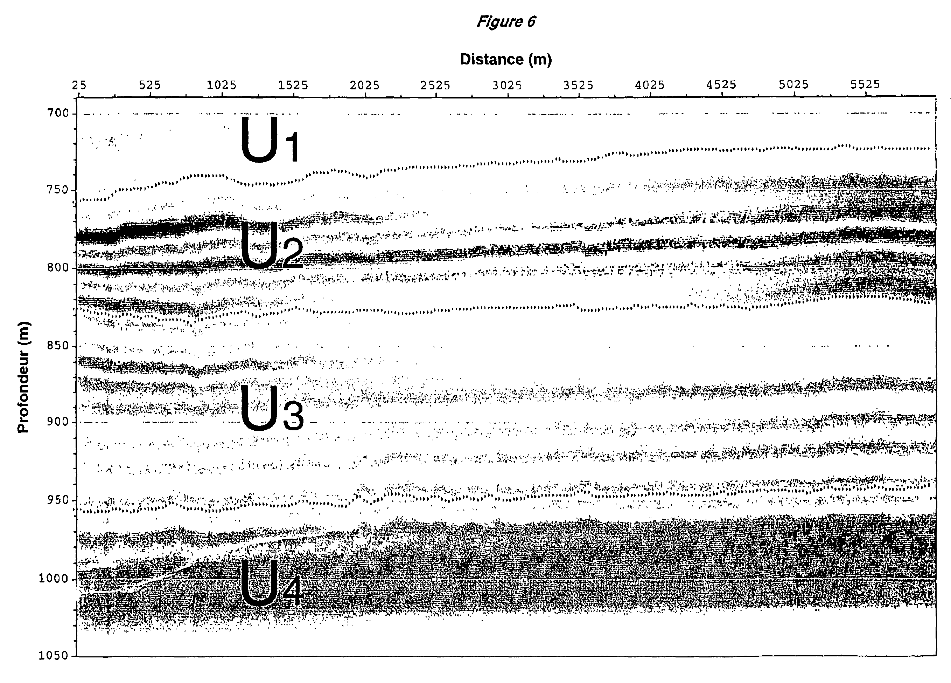

- les Fig. 5 et 6 montrent les impédances P et S du modèle a priori calculé par interpolation des données de puits le long des lignes de corrélation ; et

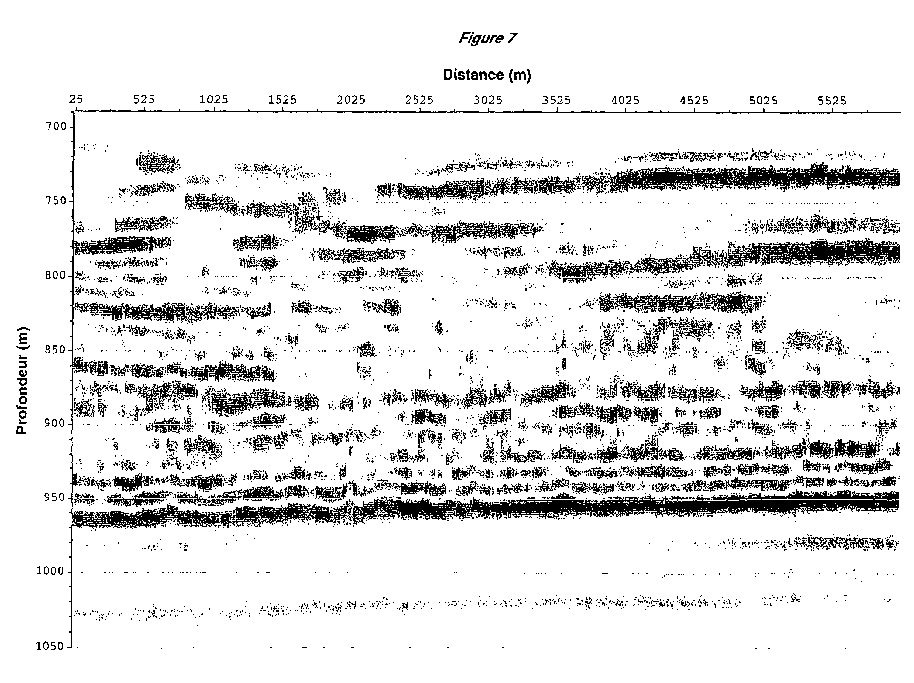

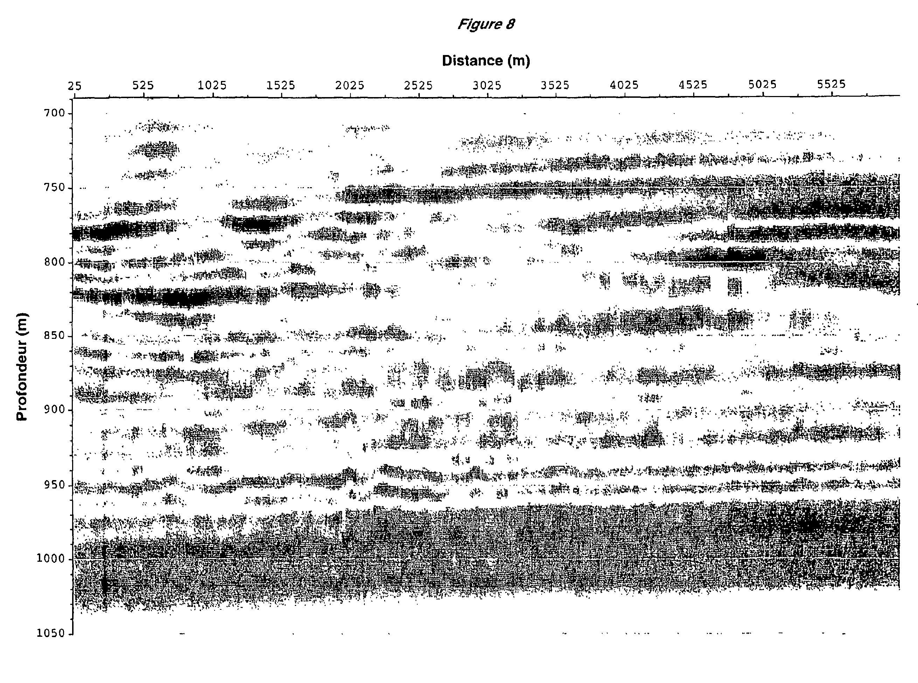

- les Fig. 7 et 8 représentent les résultats en Ip et Is pour une inversion avec information a priori où la longueur de corrélation dans l'unité $U_1$ est fixée à 500m dans l'unité U1, et à 50m dans les unités $U_2$, $U_3$, et $U_4$;

**Description détaillée**

On va considérer à titre d'exemple une zone souterraine que l'on veut imager en faisant apparaître comment varient dans cette zone plusieurs paramètres physiques tels que les impédances relativement aux ondes P et S, la masse spécifique etc. On dispose d'informations a priori permettant de former un modèle a priori à 2D ou 3D de la zone décrite par ces paramètres physiques. Ces informations a priori sont par exemple dérivées d'enregistrements sismiques obtenus classiquement en captant au moyen de récepteurs sismiques Ri couplés avec la formation (prospection sismique terrestre) ou remorqués en immersion par un navire (prospection sismique marine), les ondes renvoyées par les discontinuités en réponse à des ondes sismiques émises par une source S. Les informations a priori sont aussi obtenues en réalisant des diagraphies dans un ou plusieurs puits W forés au travers de la formation. On dispose aussi généralement d'informations structurelles d'ordre géologique sur la formation.

On réalise l'optimisation de ce modèle a priori par inversion suivant le schéma général déjà utilisé dans les brevets précités consistant à minimiser les écarts entre des enregistrements synthétiques (constituant la réponse du modèle en cours d'optimisation) et les enregistrements réels dont on dispose. A cet effet, on minimise une fonction-objectif globale à deux termes : un terme sismique et un terme géologique, au moyen d'une méthode de gradient conjugué par exemple.

Le premier terme de la fonction-objectif, qui est le terme sismique, mesure l'écart entre les données observées et les données synthétiques au sens de la norme associée à l'inverse de l'opérateur de covariance, noté $C_D$, qui décrit les incertitudes sur les données. Le second mesure l'écart entre le modèle courant et le modèle a priori, au sens de la norme associée à l'inverse de l'opérateur de covariance, noté $C_M$, qui décrit les incertitudes sur les modèles. En minimisant cette fonction-objectif globale, on peut obtenir en une seule passe un modèle multiparamètre, compatible à la fois avec les données sismiques observées et le modèle a priori multiparamètre.

La méthode selon l'invention permet l'application de ce schéma général de modélisation à une formation décrite par plusieurs paramètres physiques. A cette fin, on va utiliser une fonction-objectif globale dont les deux termes sismique et géologique vont être définis plus en détail ci-après.

**La fonction objectif sismique**

La fonction objectif sismique mesure l'écart entre chaque trace sismique et la trace sismique qui lui est liée, au sens de la norme associée à l'inverse de l'opérateur de covariance $C_D$. On suppose que le bruit sismique est décorrélé d'échantillons en échantillons. En conséquence, on choisit un opérateur de covariance diagonal décrivant l'incertitude sur les données, dont la fonction de covariance est :

$$\mathrm{cov}\big(\delta d(x,t,\varpi).\delta d(x',t',\varpi')\big) = \sigma_S^2 \delta\big(x - x', t - t', \varpi - \varpi'\big)$$

où $\sigma_S^2$ est la variance de l'incertitude sur les données, c'est-à-dire la variance du bruit sismique, et $\delta d(x,t,\overline{\omega})$ représente l'écart entre les données synthétiques et les données observées au point de coordonnée $(x,t,\overline{\omega})$ ($t$ indiquant le temps, $x$ la position latérale, et $\overline{\omega}$ l'offset (c'est à dire la distance source-récepteur)).

Cet opérateur est inversible, et la norme associée à son inverse permet de définir l'expression de la fonction objectif sismique par :

$$\big\| d - d^{obs} \big\|^2_{C_D^{-1}} = \frac{1}{2\sigma_S^2} \iiint \big(d - d^{obs}\big)^2(x,t,\varpi)\,dx\,dt\,d\varpi$$

Dans cette équation, $d^{obs}$ représente les données observées, et les données synthétiques $d$ sont calculées à partir de la donnée d'un modèle de sous-sol $m$ et d'un opérateur de modélisation $G$, selon l'expression suivante :

$$d = G(m)$$

**La fonction objectif géologique**

On sait que l'inversion 2D implique un modèle de covariance 1D le long des lignes de corrélations, et l'inversion 3D, un modèle de covariance 2D le long des surfaces de corrélations. Pour simplifier l'exposé qui suit, on se place dans le cas à 2 dimensions, sachant que les équations suivantes se généralisent facilement au cas 3D.

Soit $\delta\mathbf{m}(p)=\mathbf{m}(p)-\mathbf{m}^{\mathbf{prior}}(p)$ la fonction écart au modèle a priori au point $p$. Comme fonction de covariance de l'opérateur $C_M$, on choisit la fonction :

$$\mathrm{cov}\big(\delta\mathbf{m}(p),\delta\mathbf{m}(p')\big) = \mathbf{Q}(p)\mathbf{D}^{1/2}(p)\mathbf{D}^{1/2}(p')\mathbf{Q}(p')\exp\big(-\big\|\Lambda(p) - \Lambda(p')\big\|\big)$$

où A est une fonction de dérivée partout non nulle, et $\mathbf{Q}$ et $\mathbf{D}$ deux fonctions matricielles, telles que pour tout point p, Q(p) et D(p) soient deux matrices respectivement orthonormale et diagonale. Ces deux matrices proviennent de la décomposition en vecteur propre/valeur propre de la matrice suivante:

$$\Sigma(p) = \begin{pmatrix} \sigma_1^2 & \rho_{12}\sigma_1\sigma_2 & \cdot & \cdot & \rho_{1k}\sigma_1\sigma_k \\ \rho_{12}\sigma_1\sigma_2 & \cdot & & & \cdot \\ \cdot & & \cdot & & \cdot \\ \cdot & & & \cdot & \rho_{(k-1)k}\sigma_{k-1}\sigma_k \\ \rho_{1k}\sigma_1\sigma_k & \cdot & \cdot & \rho_{(k-1)k}\sigma_{k-1}\sigma_k & \sigma_k^2 \end{pmatrix}(p)$$

où k est le nombre de paramètres élastiques décrivant le milieu.

Cette matrice est la matrice de variance/covariance décrivant au point p, l'incertitude sur les paramètres (par la variance $\sigma_i^2$), et les corrélations de ces incertitudes (par le coefficient de corrélation $\rho_{ij}$).

En introduisant les nouveaux paramètres définis par $\delta\widetilde{\mathbf{m}} = \mathbf{D}^{-1/2}\mathbf{P}^t\delta\mathbf{m}$

et en effectuant le changement de coordonnées $\widetilde{p} = \Lambda(p)$, la fonction de covariance précédente devient :

$$\mathrm{cov}\big(\delta\widetilde{\mathbf{m}}(\widetilde{p}),\delta\widetilde{\mathbf{m}}(\widetilde{p}')\big) = \exp\big(-\|\widetilde{p}-\widetilde{p}'\|\big)$$

Il est à la portée de l'homme de l'art d'inverser un opérateur ayant une telle fonction de covariance.

Le terme géologique que l'on utilise ici est la norme de $\delta\mathbf{m}$ associée à l'inverse de l'opérateur de covariance que l'on vient de décrire.

Dans le cas où l'on désire que les incertitudes soient décrites le long des lignes de corrélation en 2D, alors en notant $s$ et $\tau$ les coordonnées curvilignes le long des lignes de corrélations, la direction de s étant tangente au lignes de corrélation.

$$\mathrm{cov}\big(\delta\mathbf{m}(p),\delta\mathbf{m}(p')\big) = \mathbf{Q}(p)\mathbf{D}^{1/2}(p)\mathbf{D}^{1/2}(p')\mathbf{Q}(p')\exp\big(-\|\Lambda(s)-\Lambda(s')\|\big)\delta(\tau-\tau')$$

cette démarche se généralisant aisément au cas 3D

Dans le cas par exemple, où l'on peut supposer que $\Lambda(x) = x/\lambda$, $\lambda$ étant la longueur de corrélation des incertitudes le long des lignes de corrélation, le terme géologique de la méthode est :

$$\big\|\delta\mathbf{m}^2\big\|_{C_M^{-1}}^2 = \sum_{i=1}^{k}\frac{1}{2}\int\left(\frac{1}{\lambda}\delta\widetilde{m}_i^2 + \lambda\big(\bar{\nabla}\delta\widetilde{m}_i.\bar{s}\big)^2\right)dx$$

où $\vec{s}(x)$ est le vecteur tangent à la ligne de corrélation passant au point $x$, et $\delta\widetilde{\mathbf{m}}$ est définit par :

$$\delta\widetilde{\mathbf{m}} = \mathbf{D}^{-1/2}\mathbf{P}^t\delta\mathbf{m}$$

Ainsi, le terme géologique que l'on a choisi permet de prendre en compte des paramètres d'incertitudes (variances, longueurs de corrélations, et coefficient de corrélation des incertitudes inter-paramètres) qui peuvent varier en tout point du domaine.

**Validation de la méthode**

Il s'agit d'un exemple synthétique dérivée d'un cas réel étudié suite à des opérations de prospection sismique marine, où la zone réservoir traversée par deux puits W1, W2 est incluse dans un milieu encaissant 1D.

Des données sismiques synthétiques ont été simulées, auxquelles on a ajouté un bruit aléatoire tel que le rapport bruit sur signal soit égal à 80%. Les ondes PP réfléchies sur le réservoir constituaient les données dites « observées ». On dispose de 240 enregistrements en couverture multiple (CDP) avec 50 valeurs de déport (« offset ») par couverture multiple avec un déport minimum de 50m, et un déport maximum de 1275m.

L'information géométrique du modèle a priori a été construite à partir de 3 horizons interprétés sur le résultat en impédance PP, sans informations a priori. Ces trois horizons définissaient quatre unités géologiques $U_1$, $U_2$, $U_3$, et $U_4$. Des lignes de corrélations ont été définies en tout point d'après une hypothèse stratigraphique de conformité suivant ces trois horizons limites.

L'information en impédance P et S aux deux puits W1, W2 aux abscisses respectives x=250m et x=5750m, a ensuite été introduite.

On a choisi une matrice de covariance exponentielle le long des lignes de corrélation, avec une longueur de corrélation $\lambda$. La variance de l'incertitude sur l'écart au modèle a priori était prise égale à 10% pour l'impédance P, et à 20% pour l'impédance S.

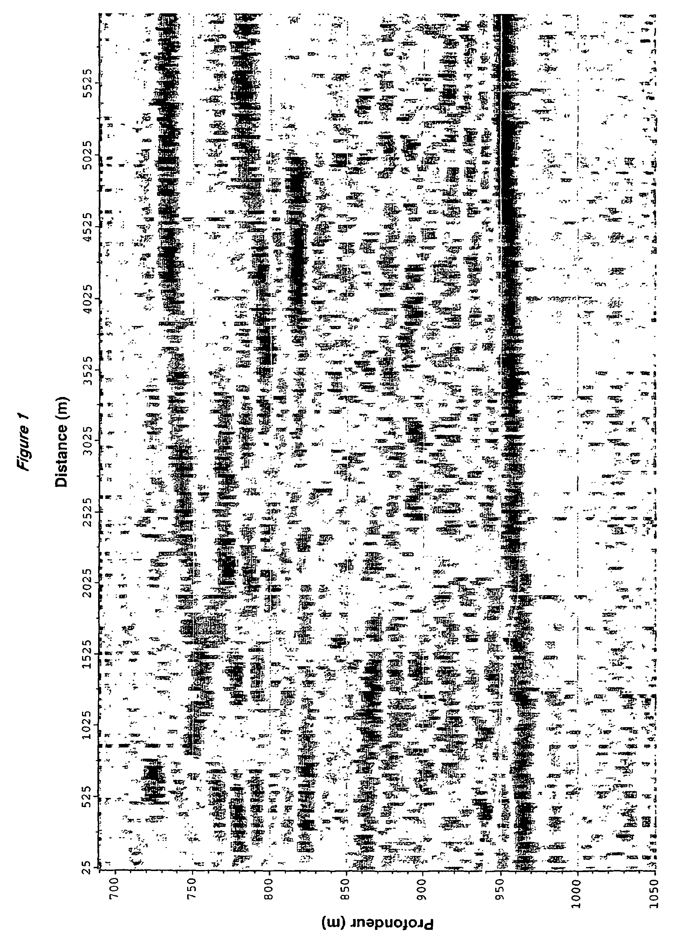

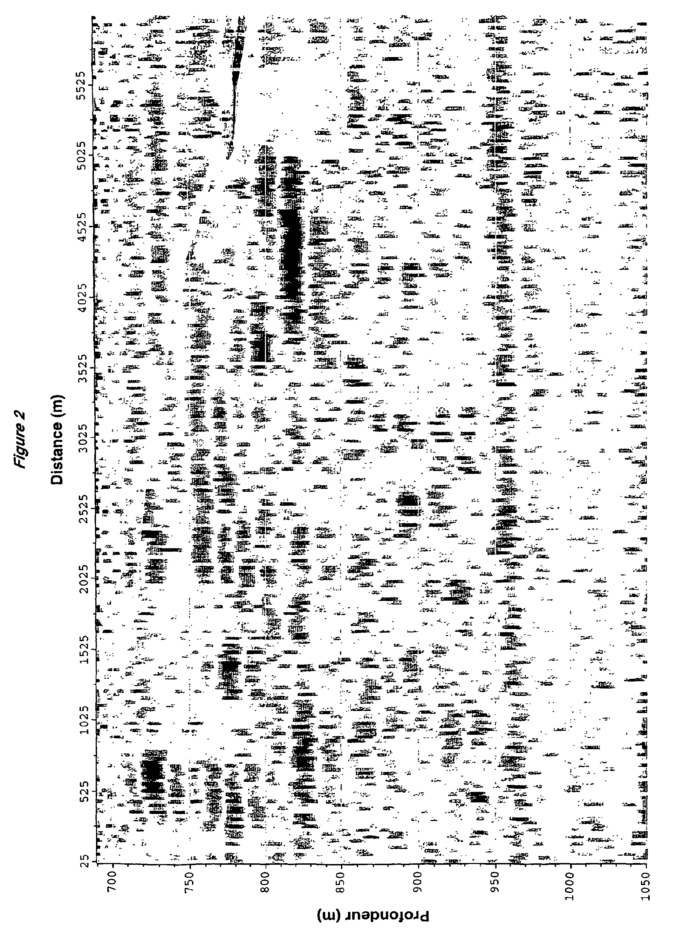

Ces résultats avec information a priori comparés avec ceux obtenus sans information a priori illustrent bien, d'une part en quoi l'information a priori permet d'améliorer l'image obtenue en impédance S et, d'autre part en quoi l'information a priori permet de diminuer les incohérences entre les traces. visibles sur les Figures 1 et 2.

**Revendications**

1. Méthode pour obtenir un modèle optimisé représentatif en 2D ou 3D d'un milieu hétérogène tel que le sous-sol, décrit par des paramètres ou grandeurs élastiques, à partir de données enregistrées correspondant à des ondes élastiques renvoyées par le milieu et captées par des récepteurs couplés avec le milieu, en réponse à des ondes élastiques qui y sont transmises par une source, et d'information a priori incluant des données mesurées in situ, la méthode comportant la construction d'un modèle géométrique en 2D ou 3D décrivant des lignes ou surfaces de corrélation, la construction d'un modèle a priori en 2D ou 3D décrit par des paramètres élastiques, à partir de ce modèle géométrique et des données mesurées in situ de ces paramètres élastiques faites à différents points du milieu hétérogène, et la formation d'un modèle optimal par inversion des données enregistrées en prenant en compte toutes les informations a priori, **caractérisée en ce que :**

   on modélise des incertitudes sur lesdits paramètres dudit modèle a priori ainsi que des corrélations desdites incertitudes, au moyen d'un opérateur de covariance défini en tout point $p$ et pour tout paramètre, à partir d'une décomposition en vecteur propre d'une matrice de variance et covariance décrivant au point $p$, les incertitudes sur chacun desdits paramètres et les corrélations de ces incertitudes, de façon à prendre en compte un degré de confiance de chacun desdits paramètres variable en tout point.

2. Méthode selon revendication 1, **caractérisée en ce que** l'on sélectionne un opérateur de covariance exponentiel

3. Méthode selon revendication 2, **caractérisée en ce que** l'on choisit un opérateur de covariance exponentiel variable selon la localisation dans le milieu.

4. Méthode selon l'une des revendications précédentes, **caractérisée en ce que** l'opérateur de covariance sélectionné est à 1D ou à 1D le long des lignes de corrélation, ou à 2D, ou à 2D le long des surfaces de corrélation ou encore à 3D.

5. Méthode selon l'une des revendications précédentes, **caractérisée en ce que** l'opérateur de covariance exponentiel est relatif à plusieurs paramètres.

6. Méthode selon l'une des revendications précédentes, **caractérisée en ce que** l'on modifie l'opérateur de covariance de façon à définir des écarts par rapport au modèle a priori pour d'autres paramètres élastiques, de telle sorte que ces écarts soient indépendants en chaque point donné du milieu.

7. Méthode selon l'une des revendications précédentes, **caractérisée en ce que** l'opérateur de covariance est anisotrope, avec des longueurs de corrélation différentes selon différentes directions dans le milieu

8. Méthode selon l'une des revendications précédentes, **caractérisée en ce que** la formation du modèle optimal est obtenue en minimisant une fonction objectif globale comprenant un terme relatif aux données enregistrées, proportionnel au carré de la norme $L^2$ de l'écart entre des données synthétiques et les données enregistrées, et d'un terme relatif au milieu, constitué dans le cas d'un modèle à 2D (respectivement 3D) d'une part du carré de la norme $L^2$ de l'écart par rapport au modèle a priori, et d'autre part, du carré de la norme $L^2$ du gradient de cet écart, projeté sur la tangente à la ligne de corrélation locale (respectivement sur le plan tangent à la surface locale de corrélation).

9. Méthode selon l'une des revendications précédentes, **caractérisée en ce que** la formation du modèle optimal à plusieurs paramètres élastiques est obtenue en minimisant une fonction objectif globale comprenant un terme relatif aux données enregistrées, proportionnel au carré de la norme $L^2$ de l'écart entre des données synthétiques et les données enregistrées, et d'un terme relatif au milieu, constitué dans le cas d'un modèle à 2D (respectivement 3D) d'une part du carré de la norme $L^2$ de l'écart par rapport au modèle a priori exprimé par les dits autres paramètres élastiques, et d'autre part, du carré de la norme $L^2$ du gradient de cet écart, projeté sur la tangente à la ligne de corrélation locale (respectivement sur le plan tangent à la surface locale de corrélation).

10. Méthode selon l'une des revendications précédentes, **caractérisée en ce que** dans le cas d'un modèle a priori en 3D, le terme relatif au milieu est proportionnel au carré de la norme $L^2$ de l'écart au modèle a priori, de la norme $L^2$ du gradient de cet écart, et du carré du Laplacien de l'écart.

**11.** Méthode selon l'une des revendications précédentes, **caractérisée en ce que** dans le cas d'un modèle a priori en 3D, le terme relatif au milieu est proportionnel au carré de la norme $L^2$ de l'écart au modèle a priori mesuré relativement aux dits autres paramètres élastiques, de la norme $L^2$ du gradient de cet écart, et du carré du Laplacien de l'écart.

**12.** Méthode selon l'une des revendications précédentes, **caractérisée en ce que** le milieu hétérogène est une zone du sous-sol, les mesures in situ sont obtenues à différentes profondeurs dans un ou plusieurs puits au travers de la zone.

**Claims**

**1.** A method for obtaining a 2D or 3D optimised representative model of a heterogeneous medium such as the subsurface, described by elastic parameters or values, from recorded data corresponding to elastic waves which are returned by the medium and captured by receivers coupled to the medium, in response to elastic waves which are transmitted therein by a source, and from a priori information comprising data measured in situ, the method comprising the construction of a 2D or 3D geometric model describing correlation lines or surfaces, the construction of a 2D or 3D a priori model described by elastic parameters, from this geometric model and data measured in situ of these elastic parameters taken at different points in the heterogeneous medium, and the formation of an optimal model by inversion of the recorded data, taking into account all of the a priori information,
**characterised in that:**

uncertainties are modelled on said parameters of said a priori model as well as correlations of said uncertainties, by means of a covariance operator defined at any point $p$ and for any parameter, from decomposing in eigen vector a variance and covariance matrix describing at the point $p$ the uncertainties on each of said parameters and the correlations of these uncertainties, so as to take into account a confidence level of each of said parameters which is variable at any point.

**2.** The method according to Claim 1, **characterised in that** an exponential covariance operator is selected.

**3.** The method according to Claim 2, **characterised in that** an exponential covariance operator which is variable depending on the localization in the medium is selected.

**4.** The method according to one of the preceding claims, **characterised in that** the selected covariance operator is a 1D operator or a 1D operator along the correlation lines, or a 2D operator, or a 2D operator along the correlation surfaces or even a 3D operator.

**5.** The method according to one of the preceding claims, **characterised in that** the exponential covariance operator relates to several parameters.

**6.** The method according to one of the preceding claims, **characterised in that** the covariance operator is modified so as to define differences with respect to the a priori model for other elastic parameters, such that these differences are independent at each given point in the medium.

**7.** The method according to one of the preceding claims, **characterised in that** the covariance operator is anisotropic, with correlation lengths which are different in different directions in the medium.

**8.** The method according to one of the preceding claims, **characterised in that** the formation of the optimal model is obtained by minimising a global objective function comprised of a term relating to the recorded data, proportional to the square of the $L^2$ standard of the difference between synthetic data and the recorded data, and of a term relating to the medium, consisting in the case of a 2D model (or 3D respectively) on the one hand, of the square of the $L^2$ standard of the difference relative to the a priori model, and on the other hand, of the square of the $L^2$ standard of the gradient of this difference, projected on the tangent to the local correlation line (or on the plane which is tangent to the local correlation surface respectively).

**9.** The method according to one of the preceding claims, **characterised in that** the formation of the optimal model having several elastic parameters is obtained by minimising a global objective function comprised of a term relating to the recorded data, proportional to the square of the $L^2$ standard of the difference between synthetic data and the recorded data, and of a term relating to the medium, consisting in the case of a 2D model (3D respectively) on the one hand, of the square of the $L^2$ standard of the difference relative to the a priori model expressed by said other elastic parameters, and on the other hand, of the square of the $L^2$ standard of the gradient of this difference, projected on the tangent to the local correlation line (or on the plane which is tangent to the local correlation surface respectively).

10. The method according to one of the preceding claims, **characterised in that** in the case of a 3D a priori model, the term relating to the medium is proportional to the square of the $L^2$ standard of the difference to the a priori model, of the $L^2$ standard of the gradient of this difference, and of the square of the Laplace operator of the difference.

11. The method according to one of the preceding claims, **characterised in that** in the case of a 3D a priori model, the term relating to the medium is proportional to the square of the $L^2$ standard of the difference from the a priori model measured relative to said other elastic parameters, of the $L^2$ standard of the gradient of this difference, and of the square of the Laplace operator of the difference.

12. The method according to one of the preceding claims, **characterised in that** the heterogeneous medium is an area of the subsurface, the in situ measurements are obtained at different depths in one or more wells through the area.

**Patentansprüche**

1. Verfahren zum Erhalt eines optimierten repräsentativen 2D- oder 3D-Modells eines heterogenen Milieus wie der Untergrund, das ausgehend von aufgezeichneten Daten, die akustisch-mechanischen Schwingungen entsprechen, die in Antwort auf akustisch-mechanische Schwingungen, die von einer Quelle ausgesendet werden, vom Milieu zurückgeworfen werden und von Empfängern aufgefangen werden, die mit dem Milieu gekoppelt sind, und von A-priori-Information, die In-situ-Messdaten einschließt, durch akustisch-mechanische Parameter oder Größen beschrieben wird, wobei das Verfahren umfasst den Aufbau eines geometrischen 2D- oder 3D-Modells, das Korrelationslinien oder -flächen beschreibt, den Aufbau eines 2D- oder 3D-A-priori-Modells, das ausgehend von diesem geometrischen Modell und den In-situ-Messdaten dieser akustisch-mechanischen Schwingungen, die an verschiedenen Punkten des heterogenen Milieus durchgeführt wurden, durch akustisch-mechanische Schwingungen beschrieben wird, und die Formung eines Optimalmodells durch Umkehrung der aufgezeichneten Daten unter Berücksichtigung aller A-priori-Informationen, **dadurch gekennzeichnet, dass:**

   Unsicherheiten über die Parameter des A-priori-Modells sowie die Korrelationen dieser Unsicherheiten mithilfe eines Kovarianzoperators, der an jedem Punkt $p$ und für jeden Parameter definiert wird, ausgehend von einer Zerlegung in Eigenvektoren einer Varianz- und Kovarianzmatrix, die am Punkt p die Unsicherheiten über jeden dieser Parameter und die Korrelationen dieser Unsicherheiten beschreibt, derart modelliert werden, dass ein an jedem Punkt variabler Konfidenzfaktor für jeden dieser Parameter berücksichtigt wird.

2. Verfahren nach Anspruch 1, **dadurch gekennzeichnet, dass** ein exponentieller Kovarianzoperator gewählt wird.

3. Verfahren nach Anspruch 2, **dadurch gekennzeichnet, dass** ein exponentieller Kovarianzoperator gewählt wird, der je nach Lage im Milieu variabel ist.

4. Verfahren nach einem der vorherigen Ansprüche, **dadurch gekennzeichnet, dass** der gewählte Kovarianzoperator in 1D oder entlang der Korrelationslinien in 1D, oder in 2D oder entlang der Korrelationsflächen in 2D, oder aber in 3D ist.

5. Verfahren nach einem der vorherigen Ansprüche, **dadurch gekennzeichnet, dass** der exponentielle Kovarianzoperator sich auf mehrere Parameter bezieht.

6. Verfahren nach einem der vorherigen Ansprüche, **dadurch gekennzeichnet, dass** der Kovarianzoperator derart modifiziert wird, dass für andere akustisch-mechanische Parameter Abweichungen vom A-priori-Modell derart definiert werden, dass diese Abweichungen an jedem gegebenen Punkt des Milieus unabhängig sind.

7. Verfahren nach einem der vorherigen Ansprüche, **dadurch gekennzeichnet, dass** der Kovarianzoperator anisotrop ist, mit Korrelationslängen, die den verschiedenen Richtungen im Milieu entsprechend unterschiedlich sind.

8. Verfahren nach einem der vorherigen Ansprüche, **dadurch gekennzeichnet, dass** die Formung des Optimalmodells durch Minimieren einer Gesamtzielfunktion erhalten wird, die einen sich auf die aufgezeichneten Daten beziehenden Ausdruck, der proportional zum Quadrat der L$^2$-Norm der Abweichung zwischen den synthetischen Daten und den aufgezeichneten Daten ist, und einen sich auf das Milieu beziehenden Ausdruck umfasst, bestehend im Falle eines Modells in 2D (beziehungsweise 3D) zum einen aus dem Quadrat der L$^2$-Norm der Abweichung vom A-priori-Modell und zum anderen aus dem Quadrat der L$^2$-Norm des Gradienten dieser Abweichung, auf die Tangente zur lokalen Korrelationslinie (beziehungsweise auf die Tangentialebene zur lokalen Korrelationsfläche) projiziert.

9. Verfahren nach einem der vorherigen Ansprüche, **dadurch gekennzeichnet, dass** die Formung des Optimalmodells mit mehreren akustisch-mechanischen Parametern durch Minimieren einer Gesamtzielfunktion erhalten wird, die einen sich auf die aufgezeichneten Daten beziehenden Ausdruck, der proportional zum Quadrat der L$^2$-Norm der Abweichung zwischen den synthetischen Daten und den aufgezeichneten Daten ist, und einen sich auf das Milieu beziehenden Ausdruck umfasst, bestehend im Falle einem Modells in 2D (beziehungsweise 3D) zum einen aus dem Quadrat der L$^2$-Norm der Abweichung vom A-priori-Modell, die durch diese anderen akustisch-mechanischen Parameter ausgedrückt wird, und zum anderen aus dem Quadrat der L$^2$-Norm des Gradienten dieser Abweichung, auf die Tangente zur lokalen Korrelationslinie (beziehungsweise auf die Tangentialebene zur lokalen Korrelationsfläche) projiziert.

10. Verfahren nach einem der vorherigen Ansprüche, **dadurch gekennzeichnet, dass** im Falle eines A-priori-Modells in 3D der Ausdruck, der sich auf das Milieu bezieht, proportional zum Quadrat der L$^2$-Norm der Abweichung vom A-priori-Modell, der L$^2$-Norm des Gradienten dieser Abweichung und des Quadrats des Laplace-Operators der Abweichung ist.

11. Verfahren nach einem der vorherigen Ansprüche, **dadurch gekennzeichnet, dass** im Falle eines A-priori-Modells in 3D der Ausdruck, der sich auf das Milieu bezieht, proportional zum Quadrat der L$^2$-Norm der in Bezug auf die anderen akustisch-mechanischen Parameter gemessenen Abweichung vom A-priori-Modell, der L$^2$-Norm des Gradienten dieser Abweichung und des Quadrats des Laplace-Operators der Abweichung ist.

12. Verfahren nach einem der vorherigen Ansprüche, **dadurch gekennzeichnet, dass** das heterogene Milieu eine Zone im Untergrund ist und die In-situ-Messungen in verschiedenen Tiefen in einem oder mehreren Bohrlöchern quer durch die Zone erhalten werden.

*Figure 1*

Distance (m)

Profondeur (m)

Figure 2

Figure 3

**Distance (m)**

Figure 4

EP 1 096 270 B1

Figure 5

EP 1 096 270 B1

*Figure 6*

Figure 7

Figure 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 354112 A

- FR 2765692

**Littérature non-brevet citée dans la description**

- **Simmons ; Backus.** Waveform-based inversion and AVO prediction-error. *Geophysics,* 1996, vol. 61, 1575-1588

- **Pan et al.** An Integrated Target Oriented Prestack Elastic Waveform Inversion : Sensitivity, Calibration, and Application. *Geophysics,* 1994, vol. 59 (9), 1392-1404